# EUROPEAN PATENT SPECIFICATION

(11) **EP 4 345 528 B1**
(45) Date of publication and mention of the grant of the patent: **21.10.2026**
(21) Application number: 24158199.0
(22) Date of filing: 15.12.2020
(51) Int. Cl.: G02B 27/01, G02B 27/00, G02B 27/28

(54) **HEAD MOUNTED DISPLAY DEVICE**
KOPFMONTIERTE ANZEIGEVORRICHTUNG
DISPOSITIF D'AFFICHAGE MONTÉ SUR LA TÊTE

(30) Priority: 05.01.2020 US 202062957281 P
(43) Date of publication of application: 03.04.2024
(62) Document number(s) of the earlier application(s) in accordance with Art. 76 EPC: 20214166.9 / 3 855 236
(73) Proprietor: HTC Corporation, Taoyuan City 330, (TW)
(72) Inventor: TSAI, Cheng-Hsiu, 330 Taoyuan City (TW); CHANG, Wei Jen, 330 Taoyuan City (TW); FAN, Fu-Cheng, 330 Taoyuan City (TW)
(74) Representative: Emde, Eric

(56) References cited:
- US-A- 5 572 343
- US-A1- 2018 031 838

## Description

### BACKGROUND

### Technical Field

The disclosure relates to a head mounted display device, and in particular, relates to a head mounted display device providing privacy mode or social mode applications.

### Description of Related Art

In the related art, the light waveguide element of a head mounted display device of augmented reality may emit light on both surfaces, so the display image is projected to the outside of the head mounted display device, and an outside viewer may thus be able to read the confidential information viewed by the wearer.

On the other hand, when a user uses a head mounted display device provided by the related art, the outside viewer cannot clearly see the user's facial expression. As such, it is difficult for the outside viewer to socially interact with the user.

In addition, through the driving manner provided by the related art, the light shutter adjusts settings of different levels of transmittance through voltage control, but the uniformity of the viewing angle thereof may vary under different voltage settings, leading to uneven display images as a result.

US 2018/031838 A1 discloses an apparatus and a method of reducing light leakage from display devices. An embodiment of reducing light leakage from display devices includes providing an optical shutter that is configured to block light from a display device from being emitted into the ambient environment when the display device is in a bright state and configured to display visual information to the user. The optical shutter can be configured to transmit light from the ambient environment to the user when the display device is not displaying visual information.

### SUMMARY

The disclosure provides a plurality of head mounted display devices capable of providing a privacy mode or social mode display effect.

According to an aspect of the present invention, a head mounted display device is provided as set forth in claim 1. According to another aspect of the present invention, a head mounted display is provided as set forth in claim 3. Preferred embodiments of the present invention may be gathered from the dependent claims.

To sum up, through periodical disabling and enabling of the light shutter provided by the disclosure in an alternating manner and the time of generation of the display image by the display, the image of the user of the head mounted display device may not be seen by the outside object role, or the image of the user may be seen by the outside object role. As such, the head mounted display device may provide enhanced performance in use when being applied to the privacy mode or the social mode.

### BRIEF DESCRIPTION OF THE DRAWINGS

FIG. 1 is a schematic view illustrating a head mounted display device.
FIG. 2 is a sequence diagram illustrating operation of the head mounted display device of FIG. 1.
FIG. 3 is a schematic view illustrating a head mounted display device and an optical path thereof according to an embodiment of the disclosure.
FIG. 4A to FIG. 5B are schematic views illustrating head mounted display devices and optical paths thereof according to a plurality of embodiments of the disclosure.
FIG. 6 is a schematic view illustrating a head mounted display device 600.
FIG. 7 is a schematic operation flow chart illustrating the head mounted display device of FIG. 6.
FIG. 8A and FIG. 8B are schematic views illustrating eye images of the user according to the embodiments of the disclosure.
FIG. 9 is a sequence diagram illustrating operation of the head mounted display device of FIG. 6.

### DESCRIPTION OF THE EMBODIMENTS

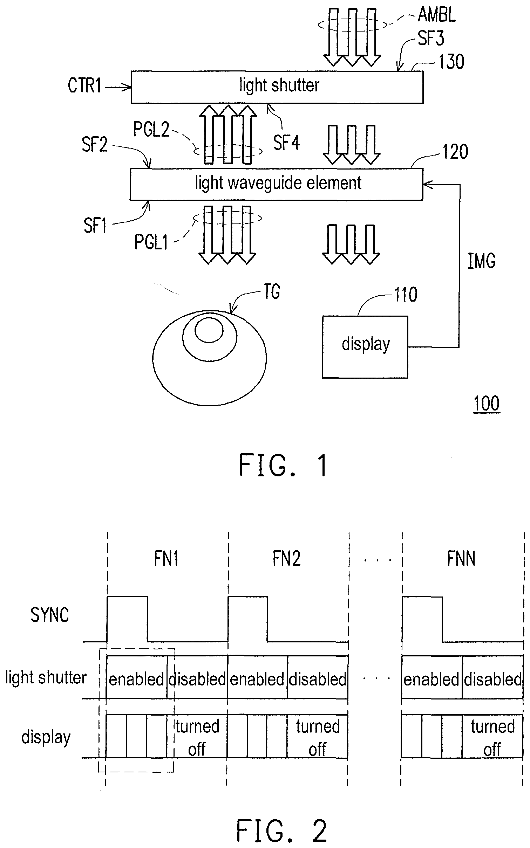

With reference to FIG. 1, FIG. 1 is a schematic view illustrating a head mounted display device. A head mounted display device 100 includes a display 110, a light waveguide element 120, and a light shutter 130. The display 110 is configured to generate a display image IMG according to a predetermined cycle. The light waveguide element 120 is coupled to the display 110. The light waveguide element 120 is configured to receive the display image IMG generated by the display 110 and generates identical projection images PGL1 and PGL2 according to the display image IMG. The light waveguide element 120 further projects the projection image PGL1 through a first surface SF1 thereof to a target zone TG and further projects the projection image PGL2 through a second surface SF2 to the light shutter 130. Herein, the first surface SF1 and the second surface SF2 are opposite to each other.

On the other hand, the light shutter 130 is adjacent to the second surface SF2 of the light waveguide element 120 and is coupled to the light waveguide element 120. Herein, the light shutter 130 may be periodically disabled and enabled in an alternating manner.

A surface SF3 of the light shutter 130 facing the outside of the head mounted display device 100 may receive ambient light AMBL. A surface SF4 of the light shutter 130 facing the light waveguide element 130 may receive the projection image PGL2. In this embodiment, the light shutter 130 is an electrically-controlled light shutter and may be disabled or enabled according to an electrical control signal CTR1. When the light shutter 130 is enabled according to the control signal CTR1, the ambient light AMBL is shuttered and may not be transmitted to the light waveguide element 120. In contrast, when the light shutter 130 is disabled according to the control signal CTR1, the ambient light AMBL may pass through the light shutter 130 and is transmitted to the light waveguide element 120.

Note that when the display 110 generates the display image IMG, the light shutter 130 is synchronously enabled according to the control signal CTR1. In this way, the projection image PGL2 generated by the light waveguide element 120 corresponding to the display image IMG is shuttered by the light shutter 130 and may not be transmitted to the outside of the head mounted display device 100. At the same time, the projection image PGL1 generated by the light waveguide element 120 is effectively transmitted to the target zone TG (i.e., an eyeball position of a user). At this time, the user may observe the display image IMG generated by the display 110.

In contrast, when the display 110 stops generating the display image IMG, the light shutter 130 is synchronously disabled according to the control signal CTR1. At this time, the display 110 stops generating the display image IMG. The ambient light AMBL may pass through the disabled light shutter 130 to be transmitted to the light waveguide element 120 and is transmitted to the target zone TG. At this time, the user may observe an ambient image transmitted by the external ambient light AMBL.

According to the above, it may be seen that when the light shutter 130 is periodically enabled and disabled in an alternating manner, the display 110 may generate the display image IMG in an alternating manner, so that the user may observe a display effect of virtual reality and/or augmented reality. Moreover, the display image IMG and an image of the user (a target zone image) are not transmitted to the outside of the head mounted display device 100, so that a privacy mode effect may be achieved.

With reference to FIG. 2, FIG. 2 is a sequence diagram illustrating operation of the head mounted display device of FIG. 1. Herein, the head mounted display device 100 may divide an operation sequence into a plurality of frame time intervals FN1 to FNN according to a synchronous signal SYNC. Herein, in a single frame time interval (taking the frame time interval FN1 as an example), the synchronous signal SYNC is at a high level, light shutter 130 may be enabled, and the display 110 may generate the display image IMG according to a pulse driving manner. In contrast, in the frame time interval FN1, when the synchronous signal SYNC is at a low level, the light shutter 130 may be disabled, and the display 110 stops generating the display image IMG.

Incidentally, a duty cycle of the synchronous signal SYNC may be dynamically adjusted and is not particularly limited. For instance, when brightness of the display image IMG is required to be increased, a time length of a positive pulse of the synchronous signal SYNC may be increased. In contrast, when brightness of the ambient image is required to be increased, the time length of the positive pulse of the synchronous signal SYNC may be decreased.

Incidentally, the light shutter 130 provided by this embodiment is periodically operated between being completely turned on and completely turned off, so uniformity of a viewing angle of the user is effectively improved.

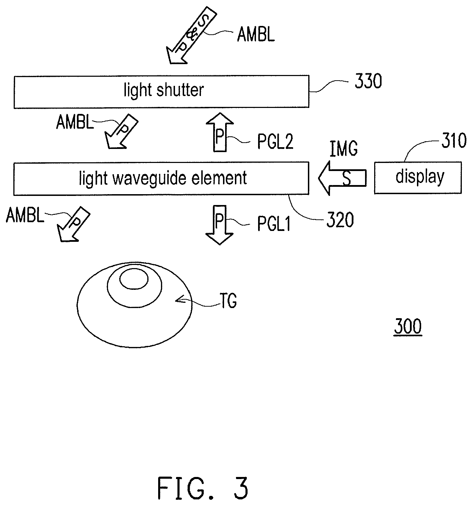

With reference to FIG. 3, FIG. 3 is a schematic view illustrating a head mounted display device and an optical path thereof according to an embodiment of the disclosure. A head mounted display device 300 includes a display 310, a light waveguide element 320, and a light shutter 330. Herein, in this embodiment, the light waveguide element 320 is a polarization-sensitive light waveguide element, and the light shutter 330 is an electrically-controlled liquid crystal light shutter.

The display 310 in the head mounted display device 300 may provide the display image IMG of second direction linearly polarized light (e.g., S light). After the display image IMG of the S light is transmitted to the light waveguide element 320, the light waveguide element 120 may generate the projection images PGL1 and PGL2 of first direction polarized light (P light) according to the display image IMG of the S light. Herein, the projection image PGL1 is projected to the target zone TG, and the projection image PGL2 is projected to the light shutter 330. The light shutter 330 may shutter the projection image PGL2 of the P light and prevents the projection image PGL2 from being transmitted to the outside of the head mounted display device 300, and that the privacy mode effect is thus achieved.

On the other hand, the ambient light AMBL having a first direction polarized light (P light) component and a second direction polarized light (S light) component is projected to the light shutter 330. The light shutter 130 may shutter the S light component of the ambient light AMBL and keeps the P light component of the ambient light AMBL to be transmitted to the light waveguide element 320. The light waveguide element 320 may transmit the P light component of the ambient light AMBL to the target zone TG to generate the ambient image.

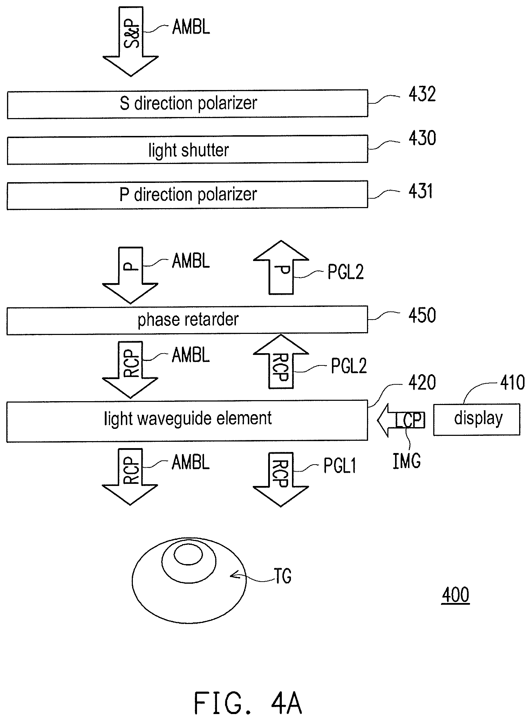

With reference to FIG. 4A, FIG. 4A is a schematic view illustrating a head mounted display device and an optical path thereof according to another embodiment of the disclosure. A head mounted display device 400 includes a display 410, a light waveguide element 420, a light shutter 430, a S direction (second direction) polarizer 432, a P direction (first direction) polarizer 431, and a phase retarder 450. Herein, the light waveguide element 420 is a polarization-sensitive light waveguide element, and the light shutter 430 is an electrically-controlled liquid crystal light shutter. In this embodiment, the S direction polarizer 432 and the P direction polarizer 431 are disposed on two sides of the light shutter 430. The P direction polarizer 431 is disposed between the light shutter 430 and the phase retarder 450. The phase retarder 450 is disposed between the P direction polarizer 431 and the light waveguide element 420. The light waveguide element 420 is disposed adjacent to the target zone TG.

In this embodiment, the display 410 provides the display image IMG of first rotation direction circularly polarized light LCP to the light waveguide element 420. The light waveguide element 420 generates the projection images PGL1 and PGL2 of second rotation direction circularly polarized light RCP according to the display image IMG of the first rotation direction circularly polarized light LCP. The projection image PGL1 is transmitted to the target zone TG, and the projection image PGL2 is transmitted to the phase retarder 450. In this embodiment, the phase retarder 450 is a 1/4 wave plate (quarter wave plate, QWP) which may delay a received light wave by a 1/4 wavelength. The phase retarder 450 may convert the projection image PGL2 of the second rotation direction circularly polarized light RCP to the projection image PGL2 of the P light.

As described above, the projection image PGL2 of the P light is projected to the P direction polarizer 431 and may be controlled whether to pass through by the light shutter 430. Therefore, as the light shutter 430 may control the projection image PGL2 not to be transmitted to the outside of the head mounted display device 400, the privacy mode effect is thus achieved.

On the other hand, the ambient light AMBL having the first direction polarized light (P light) component and the second direction polarized light (S light) component is projected to the S direction polarizer 432. Through the S direction polarizer 432 and the P direction polarizer 431, the second direction polarized light (S light) component of the ambient light AMBL may be filtered, and the first direction polarized light (P light) of the ambient light AMBL may be transmitted to the phase retarder 450.

The phase retarder 450 further converts the first direction polarized light (P light) of the ambient light AMBL to generate the ambient light AMBL of the second rotation direction circularly polarized light (RCP). The ambient light AMBL of the second rotation direction circularly polarized light (RCP) is projected to the light waveguide element 420, and the light waveguide element 420 may transmit the ambient light AMBL of the second rotation direction circularly polarized light (RCP) to the target zone TG.

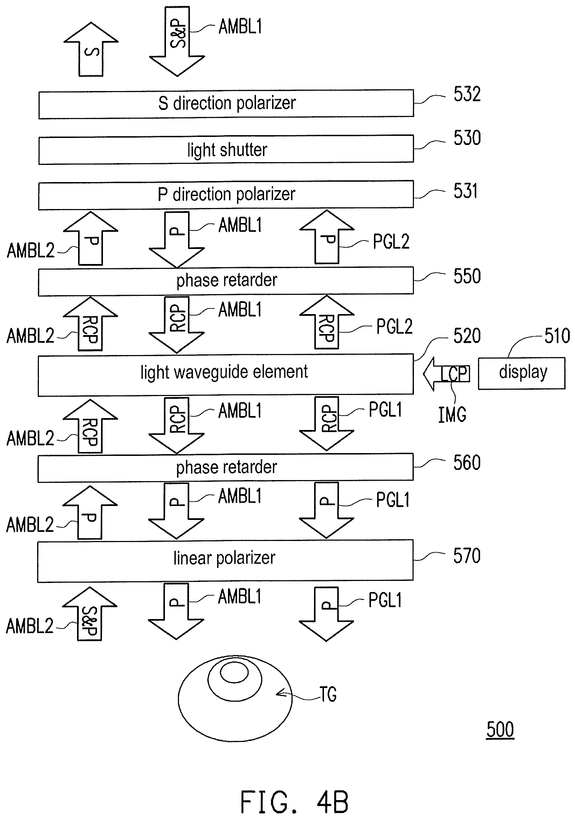

With reference to FIG. 4B, FIG. 4B is a schematic view illustrating a head mounted display device and an optical path thereof according to another embodiment of the disclosure. A head mounted display device 500 includes a display 510, a light waveguide element 520, a light shutter 530, a S direction (second direction) polarizer 532, a P direction (first direction) polarizer 531, phase retarders 550 and 560, and a linear polarizer 570. Herein, the light waveguide element 520 is a polarization-sensitive light waveguide element, and the light shutter 530 is an electrically-controlled liquid crystal light shutter.

In this embodiment, the S direction polarizer 532 and the P direction polarizer 531 are disposed on two opposite lateral sides of the light shutter 530. Herein the P direction polarizer 531 may face the target zone TG. The phase retarder 550, the light waveguide element 520, the phase retarder 560, and the linear polarizer 570 are disposed between the P direction polarizer 531 and the target zone TG in sequence. Herein, the display 510 provides the display image IMG of first rotation direction circularly polarized light (LCP) to the light waveguide element 520. The light waveguide element 520 generates the display image IMG of the second rotation direction circularly polarized light (RCP) according to the display image IMG of the first rotation direction circularly polarized light (LCP). The light waveguide element 520 transmits the display image IMG of the second rotation direction circularly polarized light (RCP) to the phase retarders 550 and 560.

In this embodiment, each of the phase retarders 550 and 560 is a QWP. The phase retarder 550 may convert the display image IMG of the second rotation direction circularly polarized light (RCP) to the display image IMG of the first direction polarized light (P light). The display image IMG of the first direction polarized light (P light) is further transmitted to the P direction polarizer 531. The light shutter 530 is then controlled to be turned on or turned off, the display image IMG may not be transmitted to the outside of the head mounted display device 500, and the privacy mode effect is thus achieved.

On the other hand, the phase retarder 560 may convert the display image IMG of the second rotation direction circularly polarized light (RCP) to the display image IMG of the first direction polarized light (P light) and transmits the display image IMG of the first direction polarized light (P light) to the linear polarizer 570. Through the linear polarizer 570, the display image IMG of the first direction polarized light (P light) may be transmitted to the target zone TG.

In the embodiments of the disclosure, the S direction polarizer 532 may receive ambient light AMBL1 having the first direction polarized light (P light) component and the second direction polarized light (S light) component. Through functioning of the S direction polarizer 532, the light shutter 530, and the P direction polarizer 531, the S light component in the ambient light AMBL1 may be filtered, and the P light component in the ambient light AMBL1 is transmitted to the phase retarder 550. The phase retarder 550 converts the P light component of the ambient light AMBL1 to the ambient light AMBL1 of the second rotation direction circularly polarized light (RCP). The light waveguide element 520 receives the ambient light AMBL1 of the second rotation direction circularly polarized light (RCP) and transmits the ambient light AMBL1 of the second rotation direction circularly polarized light (RCP) to the phase retarder 560.

The phase retarder 560 converts the ambient light AMBL1 of the second rotation direction circularly polarized light (RCP) to the ambient light AMBL1 of the P light. The ambient light AMBL1 of the P light is provided to the linear polarizer 570 and is transmitted to the target zone TG through the linear polarizer 570.

In addition, in this embodiment, the linear polarizer 570 may receive ambient light AMBL2 having the first direction polarized light (P light) component and the second direction polarized light (S light) component of another direction. The linear polarizer 570 may shutter the S light component of the ambient light AMBL2. The phase retarder 560 is configured to convert the P light component of the ambient light AMBL2 to the ambient light AMBL2 of the second rotation direction circularly polarized light (RCP). The light waveguide element 520 transmits the ambient light AMBL2 of the second rotation direction circularly polarized light (RCP) to the phase retarder 550. The phase retarder 550 converts the ambient light AMBL2 of the second rotation direction circularly polarized light (RCP) to the ambient light AMBL2 of the P light.

When the S direction polarizer 532 functions, the ambient light AMBL2 of the P light is converted to the ambient light AMBL2 of the S light and is transmitted to the outside of the head mounted display device 500.

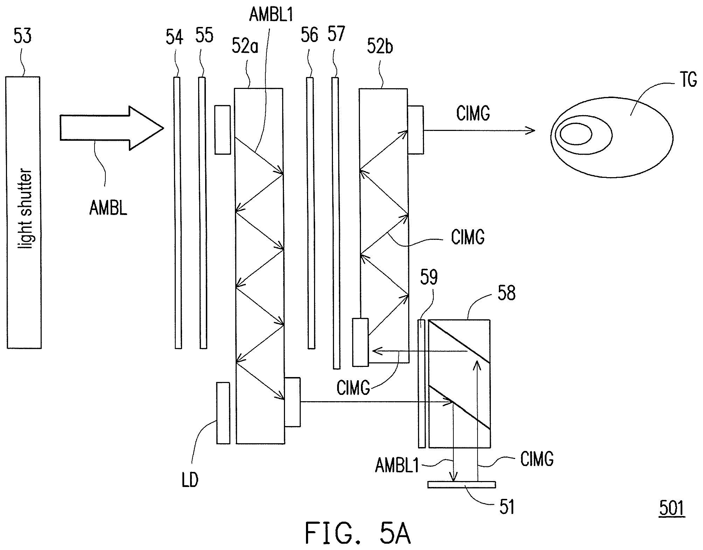

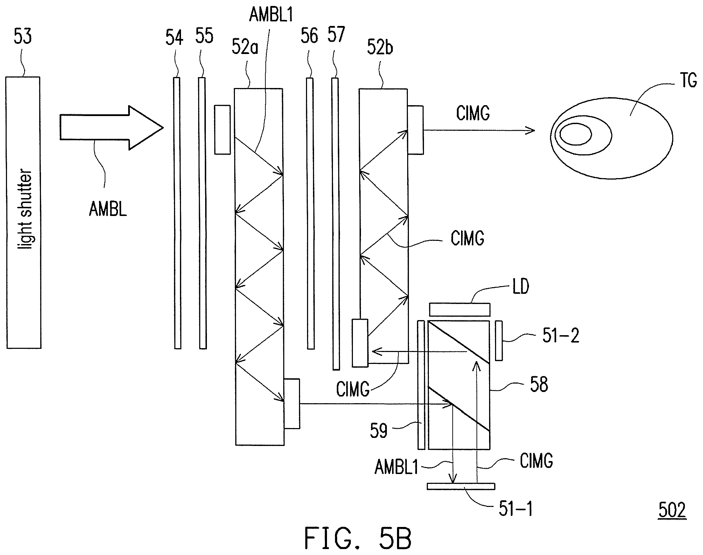

With reference to FIG. 5A and FIG. 5B, FIG. 5A and FIG. 5B are schematic views illustrating head mounted display devices and optical paths thereof according to another two embodiments of the disclosure. In FIG. 5A, a head mounted display device 501 includes a display 51, sub-light waveguide elements 52a and 52b, a light shutter 53, a S direction (second direction) polarizer 54, a P direction (first direction) polarizer 57, phase retarders 55, 56, and 59, and a light-splitting element 58. Herein, a light waveguide element provided by this embodiment is divided into the sub-light waveguide elements 52a and 52b. The sub-light waveguide elements 52a and 52b are arranged between the light shutter 53 and the target zone TG in sequence. The S direction polarizer 54 is disposed between the light shutter 53 and the sub-light waveguide element 52a. The phase retarder 56 and the P direction polarizer 57 are disposed between the sub-light waveguide elements 52a and 52b in sequence. The S direction polarizer 54 receives the ambient light AMBL having the P light and S light components and generates the ambient light AMBL1 of the second rotation direction circularly polarized light (RCP) together with the phase retarder (QWP).

The ambient light AMBL1 is transmitted into the sub-light waveguide element 52a. The sub-light waveguide element 52a transmits the ambient light AMBL1, converts the ambient light AMBL1 to the first rotation direction circularly polarized light (LCP), and transmits the ambient light AMBL1 of the first rotation direction circularly polarized light (LCP) to the phase retarder 59. The phase retarder 59 converts the ambient light AMBL1 to the S light and transmits the ambient light AMBL1 of the S light into the light-splitting element 58. Herein, surfaces of the phase retarder 59 and the light-splitting element 58 receiving the ambient light AMBL1 are disposed adjacent to each other. The light-splitting element 58 transmits the ambient light AMBL1 of the S light to the display 51. In this embodiment, the display 51 may be a liquid crystal on silicon display.

Besides, the display 51 may send a display image CIMG of the P light to the light-splitting element 58. The light-splitting element 58 transfers the display image CIMG of the P light to the phase retarder 59, and the phase retarder 59 converts the display image CIMG of the P light to the display image CIMG of the second rotation direction circularly polarized light (RCP) and transmits the display image CIMG of the second rotation direction circularly polarized light (RCP) to the sub-light waveguide element 52b. Through a light waveguide effect provided by the sub-light waveguide element 52b, the display image CIMG may be transmitted to the target zone TG. Herein, the display image CIMG transmitted in the sub-light waveguide element 52b may be the first rotation direction circularly polarized light (LCP), and the display image CIMG sent to the target zone TG may be the second rotation direction circularly polarized light (RCP).

Note that in this embodiment, the display image CIMG may include an ambient light image formed by the ambient light AMBL1 and may provide the user with a display effect of observing the augmented reality. Besides, in this embodiment, an image of the target zone TG is not seen by a user outside the head mounted display device 5A, and that the privacy mode effect is thus achieved.

Besides, in FIG. 5B, different from FIG. 5A, a head mounted display device 502 in FIG. 5B has two separately disposed displays 51-1 and 51-2. An arrangement position of the display 51-1 may be identical to that of the display 51 in FIG. 5A. The display 51-2 may be disposed adjacent to another surface of the light-splitting element 58. Herein, a display image sent by the display 51-2 may directly penetrate through the light-splitting element 58 and then passes through the phase retarder 59 to be transmitted into the sub-light waveguide element 52b.

Incidentally, in each of the embodiments of FIGs. 5A and 5B, a light-emitting diode LD may be configured to project a light beam to the eyeball of the user when tracking movements of the eyeball.

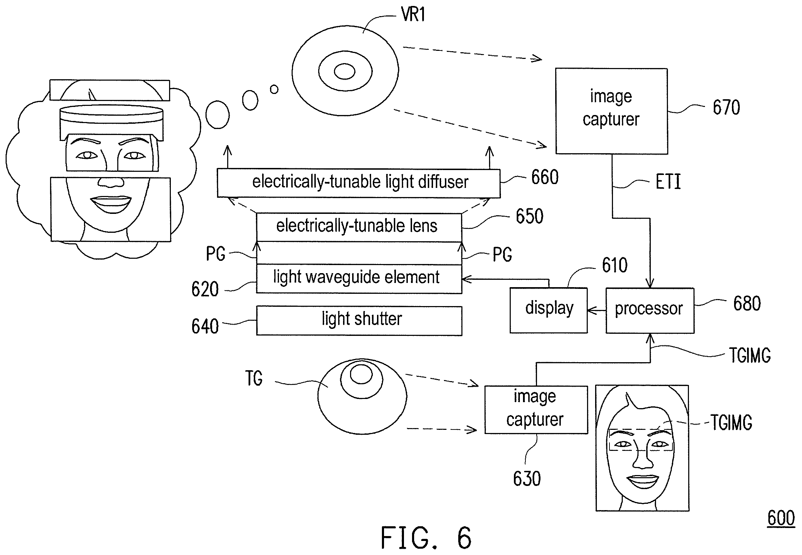

With reference to FIG. 6, FIG. 6 is a schematic view illustrating a head mounted display device 600. The head mounted display device 600 includes a display 610, a light waveguide element 620, image capturers 630 and 670, a light shutter 640, an electrically-controlled lens 650, an electrically-controlled light diffuser 660, and a processor 680. The display 610 may periodically provide the display image IMG and a setting image SETI in an alternating manner. The light waveguide element 620 is coupled to the display 610. The light waveguide element 620 generates a projection image PG according to the display image IMG and the setting image SETI in a time-division manner. Herein, the projection image PG1 is projected to the electrically-controlled lens 650.

In addition, the light shutter 640 is disposed between the light waveguide element 620 and the target zone TG, and the light shutter 640 is periodically disabled and enabled in an alternating manner. When the light shutter 640 is enabled, light may not pass through the light shutter 640, and when the light shutter 640 is disabled, light may pass through the light shutter 640.

The image capturer 630 may be configured to periodically capture a target zone image TGIMG of the target zone TG. When the target zone TG corresponds to an eye position of the user, the target zone image TGIMG may be an image of the eye of the user. The image capturer 630 is coupled to the processor 680 and sends the target zone image TGIMG to the processor 680. Herein, the target zone image TGIMG may act as the setting image SETI. In the embodiments of the disclosure, the setting image SETI may also be other predetermined images.

Regarding details of operation, when the display 610 provides the setting image SETI, the light shutter 640 is enabled. At the same time, the image capturer 630 captures the target zone image TGIMG. When the display 610 provides the display image IMG, the light shutter 640 is disabled, and the image capturer 630 stops capturing the target zone image TGIMG.

On the other hand, the image capturer 670 may be configured to capture an eyeball image VR1 of the object role to act as eyeball tracking information ETI of the object role. The processor 680 obtains a viewing direction of the object role according to the eyeball tracking information ETI, such that the display 610 provides the setting image SETI according to the viewing direction.

On the other hand, the electrically-controlled lens 650 and the electrically-controlled light diffuser 660 may adjust a size of the projection image PG provided by the light waveguide element 620 and transmits the projection image PG to the object role, and a social mode effect may thus be achieved.

The processor 680 may be implemented through any processor having computing capabilities and known to a person of ordinary skill in the art and is not particularly limited.

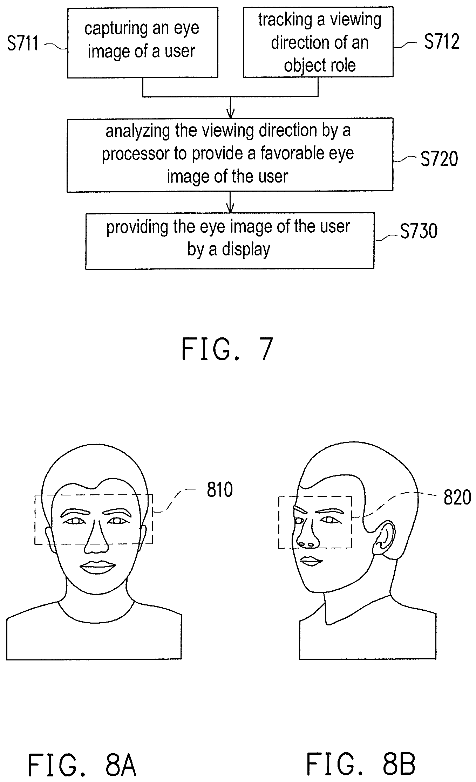

With reference to FIG. 6 and FIG. 7 together, FIG. 7 is a schematic operation flow chart illustrating the head mounted display device of FIG. 6. Herein, in step S711, the image capturer 630 may capture an eye image of the user. In step S712, through operation of the image capturer 670, the viewing direction of the object role may be tracked. Further, in step S720, the processor 680 may analyze the viewing direction of the object role and accordingly provides a favorable eye image of the user. In step S730, the display 610 may provide and output the eye image of the user to the object role for viewing, and the social mode effect is thus achieved.

Herein, with reference to FIG. 8A and FIG. 8B which are schematic views illustrating eye images of the user according to the embodiments of the disclosure. When the viewing direction of the object role is determined to be directly looking at the user, an eye image 810 of the front of the user as shown in FIG. 8A may be generated. In addition, when the viewing direction of the object role is determined to be obliquely (side viewing) looking at the user, an eye image 820 of the front of the user as shown in FIG. 8B may be generated.

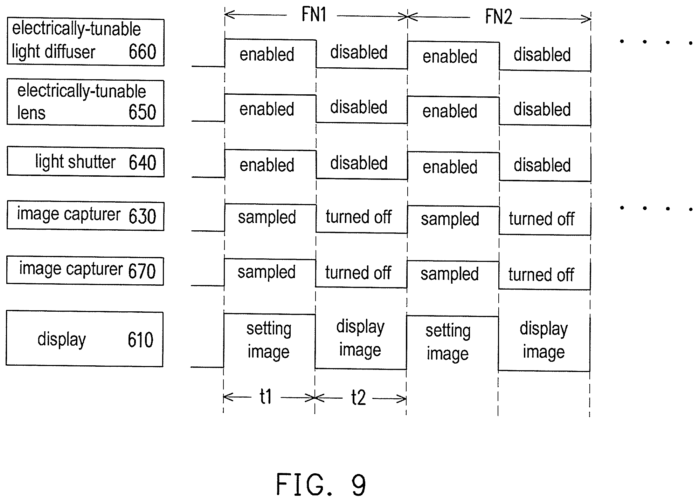

With reference to FIG. 9, FIG. 9 is a sequence diagram illustrating operation of the head mounted display device of FIG. 6. Herein, an operation sequence of the head mounted display device 600 may be divided into a plurality of continuous frame cycles FN1 and FN2. In the frame cycle FN1, the display 610 may provide the setting image SETI first in a time interval t1 and then provides the display image IMG in a time interval t2. Correspondingly, in the time interval t1, the image capturer 630 captures the eye image of the user, and the image capturer 670 synchronously captures the eyeball image VR1 of the object role. At the same time, the electrically-controlled lens 650, the electrically-controlled light diffuser 660, and the light shutter 640 are all enabled. In this way, the eye image of the user captured by the image capturer 630 may act as the setting image SETI and is transmitted to the object role end through the projection image PG. The object role may thus observe the eye image of the user.

In the time interval t2, the electrically-controlled lens 650, the electrically-controlled light diffuser 660, and the light shutter 640 are all disabled, and the image capturers 630 and 670 are both turned off. At the same time, the display 610 provides the display image IMG. At this time, the light shutter 640 is disabled, and the display image IMG transmitted by the light waveguide element 620 may penetrate through the light shutter 640 to be transmitted to the eye of the user. At the same time, the ambient light may penetrate through the light shutter 640 to be transmitted to the eye of the user, so that the user may observe the display effect of virtual reality and/or augmented reality.

In each of the frame cycles FN1 to FN2, the setting image SET1 is provided to the object role in an alternating manner and the display image IMG is provided to the user, and in this way, the user may socially interact with the object role synchronously when experiencing the display effect of virtual reality and/or augmented reality, and the social mode effect is thus achieved.

Incidentally, the light shutter 640 provided by this embodiment is periodically operated between being completely turned on and completely turned off, so uniformity of the viewing angle of the user is effectively improved.

In view of the foregoing, in the head mounted display device provided by the disclosure, as the display and the light shutter may be operated together to be disabled/enabled, the privacy mode or the social mode effect may thus be achieved. In addition, the light shutter provided by the disclosure is periodically operated between being completely turned on and completely turned off, so uniformity of the viewing angle of the user may be effectively improved.

## Claims

1. A head mounted display device (300), comprising:
a display (310), periodically providing a display image (IMG) according to a synchronous signal (CTR1);
a light waveguide element (320), coupled to the display (310), having a first surface (SF1) and a second surface (SF2) opposite to each other, wherein the light waveguide element (320) is adapted to receive the display image (IMG), to generate a projection image according to the display image (IMG), to project the projection image from the second surface (SF2), and to project the projection image to a target zone (TG) from the first surface (SF1), wherein the head mounted display device (300) is configured so that the target zone (TG) corresponds to an eyeball position of a user; and
a light shutter (330), adjacent to the second surface (SF2) of the light waveguide element (320), coupled to the light waveguide element (320), wherein the light shutter (330) is periodically disabled and enabled in an alternating manner according to the synchronous signal (CTR1),
wherein the light shutter (330) is configured to allow first ambient light (AMBL) to be transmitted to the light waveguide element (320) when the display (310) stops providing the display image (IMG);
wherein a duty cycle of the synchronous signal (CTR1) is dynamically adjustable to adjust a brightness of the display image (IMG); and
wherein the light waveguide element (320) is adapted to generate projection images (PGL1, PGL2) of first direction polarized light according to the display image (IMG) of second direction polarized light wherein the first direction of polarization is different from the second direction of polarization, and the light shutter (330) is an electrically-controlled liquid crystal light shutter.

2. The head mounted display device (300) according to claim 1, wherein the first direction polarized light is P light, and the second direction polarized light is S light.

3. A head mounted display device (400, 500), comprising:
a display (410, 510), periodically providing a display image (IMG) of a first rotation direction circularly polarized light according to a synchronous signal (CTR1);
a light waveguide element (420, 520), coupled to the display (410, 510), having a first surface (SF1) and a second surface (SF2) opposite to each other, wherein the light waveguide element (420, 520) is adapted to receive the display image (IMG), to generate a projection image according to the display image (IMG), to project the projection image from the second surface (SF2), and to project the projection image to a target zone (TG) from the first surface (SF1), wherein the head mounted display device (400, 500) is configured so that the target zone (TG) corresponds to an eyeball position of a user;
a light shutter (430, 530), adjacent to the second surface (SF2) of the light waveguide element (420, 520), coupled to the light waveguide element (420, 520), wherein the light shutter (430, 530) is periodically disabled and enabled in an alternating manner according to the synchronous signal (CTR1),
a first phase retarder (450, 550), disposed between the second surface (SF2) of the light waveguide element (420, 520) and the light shutter (430, 530);
a first direction polarizer (431, 531), disposed between the first phase retarder (450, 550) and the light shutter (430, 530); and
a second direction polarizer (432, 532), wherein the light shutter (430, 530) is disposed between the first direction polarizer (431, 531) and the second direction polarizer (432, 532).
wherein the light shutter (430, 530) is configured to allow first ambient light (AMBL) to be transmitted to the light waveguide element (420, 520) when the display (410, 510) stops providing the display image (IMG);
wherein a duty cycle of the synchronous signal (CTR1) is dynamically adjustable to adjust a brightness of the display image (IMG); and
wherein the light waveguide element (420, 520) is adapted to generate the projection image of a second rotation direction circularly polarized light to be projected to the target zone (TG) and the light shutter (430, 530), wherein the first rotation direction of the circularly polarized light is different from second rotation direction of the circularly polarized light, and the light shutter (130, 330, 430, 530) is an electrically-controlled liquid crystal light shutter.

4. The head mounted display device (400, 500) according to claim 3, wherein the first rotation direction circularly polarized light is left-hand circularly polarized, LCP, light, and the second rotation direction circularly polarized light is right-hand circularly polarized, RCP, light.

5. The head mounted display device (300, 400, 500) according to any one of claims 1 to 4, wherein the light shutter (330, 430, 530) is configured to block the first ambient light (AMBL) from being transmitted to the light waveguide element (320, 420, 520) when the display (310, 410, 510) provides the display image (IMG).

6. The head mounted display device (100, 300, 400, 500) according to claim 1 or 2, wherein the light shutter (330) is adapted to filter a second direction linearly polarized light component in the first ambient light (AMBL) and to transmit a first direction linearly polarized light component in the first ambient light (AMBL) to the target zone (TG), the display (310) is adapted to provide the display image (IMG) of a second direction linearly polarized light, and the light waveguide element (320) is adapted to generate the projection image of the same second direction linearly polarized light.

7. The head mounted display device (400, 500) according to claim 3 or 4, wherein the second direction polarizer (432, 532), the light shutter (430, 530), and the first direction polarizer (431, 531) are adapted to filter a second direction linearly polarized light component of the first ambient light (AMBL) and to provide a first direction linearly polarized light component of the first ambient light (AMBL) to the first phase retarder (450, 550) when the light shutter (430, 530) is disabled, and the first phase retarder (450, 550) is adapted to convert the first direction linearly polarized light component of the first ambient light (AMBL) to the second direction circularly polarized light to be projected to the light waveguide element (420, 520).

8. The head mounted display device (500) according to claim 3 or 4, further comprising:
a second phase retarder (560), disposed between the first surface (SF1) of the light waveguide element (520) and the target zone (TG); and
a linear polarizer (570), disposed between the second phase retarder (560) and the target zone (TG).

9. The head mounted display device (500) according to claim 8, wherein the display (510) is adapted to provide the display image (IMG) of the first rotation direction circularly polarized light, and the light waveguide element (520) is adapted to generate the projection image of the second rotation direction circularly polarized light, and the second phase retarder (560) and the linear polarizer (570) are adapted to convert the projection image to the first direction linearly polarized light to be projected to the target zone (TG).

10. The head mounted display device (500) according to claim 9, wherein the second phase retarder (560) and the linear polarizer (570) are adapted to convert the first ambient light of the second direction circularly polarized light to the first direction linearly polarized light.

11. The head mounted display device (500) according to claim 10, wherein the linear polarizer (570) is adapted to further receive a second ambient light (AMBL2), and the linear polarizer (570) and the second phase retarder (560) are adapted to convert the second ambient light (AMBL2) to the second direction circularly polarized light to be transmitted to the light waveguide element (520).

12. The head mounted display device (501) according to claim 1 or 2, wherein the light waveguide element comprises a first sub-light waveguide element (52a) and a second sub-light waveguide element (52b), the first sub-light waveguide element (52a) and the second sub-light waveguide element (52b) are disposed between the light shutter (53) and the target zone (TG) in sequence, and the head mounted display device (501) further comprises:
a second direction polarizer (54), disposed between the light shutter (53) and the first sub-light waveguide element (52a), receiving the first ambient light (AMBL1);
a first phase retarder (55), disposed between the second direction polarizer (54) and the first sub-light waveguide element (52a), generating a second ambient light (AMBL1) according to the first ambient light (AMBL1);
a second phase retarder (56), disposed between the first sub-light waveguide element (52a) and the second sub-light waveguide element (52b);
a first direction polarizer (57), disposed between the second phase retarder (56) and the second sub-light waveguide element (52b);
a light-splitting element (58), receiving an ambient light image, transferring the ambient light image to the display (51), wherein the light-splitting element (58) receives the display image (CIMG) and transfers the display image (CIMG) to the second sub-light waveguide element (52b); and
a third phase retarder (59), disposed adjacent to a surface of the light-splitting element (58) receiving the second ambient light (AMBL1)and transmitting the display image (CIMG);
wherein the second sub-light waveguide element (52b) transmits the display image (CIMG) and the second ambient light (AMBL1) to the target zone (TG).

## Patentansprüche

1. Eine am Kopf zu befestigende Anzeigevorrichtung (300), umfassend:
ein Display (310), das periodisch ein Anzeigebild (IMG) entsprechend einem Synchronisationssignal (CTR1) bereitstellt;
ein Lichtwellenleiterelement (320), das mit dem Display (310) gekoppelt ist und eine erste Oberfläche (SF1) sowie eine zweite Oberfläche (SF2) aufweist, die einander gegenüberliegen, wobei das Lichtwellenleiterelement (320) dazu ausgelegt ist, das Anzeigebild (IMG) zu empfangen, ein Projektionsbild entsprechend dem Anzeigebild (IMG) zu erzeugen, das Projektionsbild von der zweiten Oberfläche (SF2) zu projizieren und das Projektionsbild von der ersten Oberfläche (SF1) auf eine Zielzone (TG) zu projizieren, wobei die am Kopf zu befestigende Anzeigevorrichtung (300) so konfiguriert ist, dass die Zielzone (TG) einer Augapfelposition eines Benutzers entspricht; und
ein Lichtverschluss (330) benachbart zu der zweiten Oberfläche (SF2) des Lichtwellenleiterelements (320) und gekoppelt mit dem Lichtwellenleiterelement (320), wobei der Lichtverschluss (330) entsprechend dem Synchronisationssignal (CTR1) abwechselnd periodisch deaktiviert und aktiviert wird,
wobei der Lichtverschluss (330) so konfiguriert ist, dass er die Übertragung von erstem Umgebungslicht (AMBL) zum Lichtwellenleiterelement (320) zulässt, wenn das Display (310) die Bereitstellung des Anzeigebildes (IMG) einstellt;
wobei ein Tastverhältnis des Synchronisationssignals (CTR1) dynamisch einstellbar ist, um eine Helligkeit des Anzeigebildes (IMG) einzustellen; und
wobei das Lichtwellenleiterelement (320) dazu ausgelegt ist, Projektionsbilder (PGL1, PGL2) von in einer ersten Richtung polarisiertem Licht entsprechend dem Anzeigebild (IMG) von in einer zweiten Richtung polarisiertem Licht zu erzeugen, wobei sich die erste Polarisationsrichtung von der zweiten Polarisationsrichtung unterscheidet, und der Lichtverschluss (330) ein elektrisch gesteuerter Flüssigkristall-Lichtverschluss ist.

2. Die am Kopf zu befestigende Anzeigevorrichtung (300) nach Anspruch 1, wobei das in der ersten Richtung polarisierte Licht P-Licht ist und das in der zweiten Richtung polarisierte Licht S-Licht ist.

3. Eine am Kopf zu befestigende Anzeigevorrichtung (400, 500), umfassend:
ein Display (410, 510), das periodisch ein Anzeigebild (IMG) aus zirkular polarisiertem Licht einer ersten Rotationsrichtung entsprechend einem Synchronisationssignal (CTR1) bereitstellt;
ein Lichtwellenleiterelement (420, 520), das mit dem Display (410, 510) gekoppelt ist und eine erste Oberfläche (SF1) sowie eine zweite Oberfläche (SF2) aufweist, die einander gegenüberliegen, wobei das Lichtwellenleiterelement (420, 520) dazu ausgelegt ist, das Anzeigebild (IMG) zu empfangen, ein Projektionsbild entsprechend dem Anzeigebild (IMG) zu erzeugen, das Projektionsbild von der zweiten Oberfläche (SF2) zu projizieren und das Projektionsbild von der ersten Oberfläche (SF1) auf einen Zielbereich (TG) zu projizieren, wobei die am Kopf zu befestigende Anzeigevorrichtung (400, 500) so konfiguriert ist, dass der Zielbereich (TG) einer Augapfelposition eines Benutzers entspricht;
einen Lichtverschluss (430, 530) benachbart zu der zweiten Oberfläche (SF2) des Lichtwellenleiterelements (420, 520) und gekoppelt mit dem Lichtwellenleiterelement (420, 520), wobei der Lichtverschluss (430, 530) entsprechend dem Synchronisationssignal (CTR1) abwechselnd periodisch deaktiviert und aktiviert wird,
einen ersten Phasenverzögerer (450, 550), der zwischen der zweiten Oberfläche (SF2) des Lichtwellenleiterelements (420, 520) und dem Lichtverschluss (430, 530) angeordnet ist;
einen Polarisator für eine erste Richtung (431, 531), der zwischen dem ersten Phasenverzögerer (450, 550) und dem Lichtverschluss (430, 530) angeordnet ist; und
einen Polarisator (432, 532) für eine zweite Richtung, wobei der Lichtverschluss (430, 530) zwischen dem Polarisator (431, 531) für die erste Richtung und dem Polarisator (432, 532) für die zweite Richtung angeordnet ist.
wobei der Lichtverschluss (430, 530) so konfiguriert ist, dass er es ermöglicht, dass erstes Umgebungslicht (AMBL) zu dem Lichtwellenleiterelement (420, 520) übertragen wird, wenn das Display (410, 510) die Bereitstellung des Anzeigebildes (IMG) einstellt;
wobei ein Tastverhältnis des Synchronisationssignals (CTR1) dynamisch einstellbar ist, um eine Helligkeit des Anzeigebildes (IMG) einzustellen; und
wobei das Lichtwellenleiterelement (420, 520) dazu ausgelegt ist, das Projektionsbild eines zirkular polarisierten Lichts mit einer ersten Rotationsrichtung zu erzeugen, das auf die Zielzone (TG) und den Lichtverschluss (430, 530) projiziert werden soll, wobei sich die erste Rotationsrichtung des zirkular polarisierten Lichts von einer zweiten Rotationsrichtung des zirkular polarisierten Lichts unterscheidet, und der Lichtverschluss (130, 330, 430, 530) ein elektrisch gesteuerter Flüssigkristall-Lichtverschluss ist.

4. Die am Kopf zu befestigende Anzeigevorrichtung (400, 500) gemäß Anspruch 3, wobei das zirkular polarisierte Licht der ersten Rotationsrichtung linksdrehend zirkular polarisiertes Licht (LCP) ist und das zirkular polarisierte Licht der zweiten Rotationsrichtung rechtsdrehend zirkular polarisiertes Licht (RCP) ist.

5. Die am Kopf zu befestigende Anzeigevorrichtung (300, 400, 500) gemäß einem der Ansprüche 1 bis 4, wobei der Lichtverschluss (330, 430, 530) so konfiguriert ist, dass er verhindert, dass das erste Umgebungslicht (AMBL) zum Lichtwellenleiterelement (320, 420, 520) durchgelassen wird, wenn die Anzeige (310, 410, 510) das Anzeigebild (IMG) bereitstellt.

6. Die am Kopf zu befestigende Anzeigevorrichtung (100, 300, 400, 500) gemäß Anspruch 1 oder 2, wobei der Lichtverschluss (330) dazu ausgelegt ist, eine linear polarisierte Lichtkomponente einer zweiten Richtung im ersten Umgebungslicht (AMBL) zu filtern und eine linear polarisierte Lichtkomponente einer ersten Richtung im ersten Umgebungslicht (AMBL) in den Zielbereich (TG) durchzulassen, wobei das Display (310) dazu ausgelegt ist, das Displaybild (IMG) eines linear polarisierten Lichts einer zweiten Richtung bereitzustellen, und das Lichtwellenleiterelement (320) dazu ausgelegt ist, das Projektionsbild desselben linear polarisierten Lichts einer zweiten Richtung zu erzeugen.

7. Die am Kopf zu befestigende Anzeigevorrichtung (400, 500) nach Anspruch 3 oder 4, wobei der Polarisator für die zweite Richtung (432, 532), der Lichtverschluss (430, 530) und der Polarisator für die erste Richtung (431, 531) so ausgelegt sind, dass sie eine linear polarisierte Lichtkomponente der zweiten Richtung des ersten Umgebungslichts (AMBL) filtern und eine linear polarisierte Lichtkomponente der ersten Richtung des ersten Umgebungslichts (AMBL) dem ersten Phasenverzögerer (450, 550) zuführen, wenn der Lichtverschluss (430, 530) deaktiviert ist, und der erste Phasenverzögerer (450, 550) dazu ausgelegt ist, die linear polarisierte Lichtkomponente der ersten Richtung des ersten Umgebungslichts (AMBL) in zirkular polarisiertes Licht der zweiten Richtung umzuwandeln, das auf das Lichtwellenleiterelement (420, 520) projiziert werden soll.

8. Die am Kopf zu befestigende Anzeigevorrichtung (500) nach Anspruch 3 oder 4, ferner umfassend:
einen zweiten Phasenverzögerer (560), der zwischen der ersten Oberfläche (SF1) des Lichtwellenleiterelements (520) und der Zielzone (TG) angeordnet ist; und
einen linearen Polarisator (570), der zwischen dem zweiten Phasenverzögerer (560) und der Zielzone (TG) angeordnet ist.

9. Die am Kopf zu befestigende Anzeigevorrichtung (500) nach Anspruch 8, wobei die Anzeige (510) dazu ausgelegt ist, das Anzeigebild (IMG) des zirkular polarisierten Lichts der ersten Rotationsrichtung bereitzustellen, und das Lichtwellenleiterelement (520) dazu ausgelegt ist, das Projektionsbild des zirkular polarisierten Lichts der zweiten Rotationsrichtung zu erzeugen, und der zweite Phasenverzögerer (560) und der lineare Polarisator (570) dazu ausgelegt sind, das Projektionsbild in linear polarisiertes Licht der ersten Richtung umzuwandeln, das auf die Zielzone (TG) projiziert werden soll.

10. Die am Kopf zu befestigende Anzeigevorrichtung (500) nach Anspruch 9, wobei der zweite Phasenverzögerer (560) und der lineare Polarisator (570) dazu ausgelegt sind, das erste Umgebungslicht des in der zweiten Richtung zirkular polarisierten Lichts in linear polarisiertes Licht der ersten Richtung umzuwandeln.

11. Die am Kopf zu befestigende Anzeigevorrichtung (500) nach Anspruch 10, wobei der lineare Polarisator (570) dazu ausgelegt ist, ferner ein zweites Umgebungslicht (AMBL2) zu empfangen, und der lineare Polarisator (570) und der zweite Phasenverzögerer (560) dazu ausgelegt sind, das zweite Umgebungslicht (AMBL2) in zirkular polarisiertes Licht der zweiten Richtung umzuwandeln, das an das Lichtwellenleiterelement (520) übertragen wird.

12. Die am Kopf zu befestigende Anzeigevorrichtung (501) nach Anspruch 1 oder 2, wobei das Lichtwellenleiterelement ein erstes Teil-Lichtwellenleiterelement (52a) und ein zweites Teil-Lichtwellenleiterelement (52b) umfasst, das erste Teil-Lichtwellenleiterelement (52a) und das zweite Teil-Lichtwellenleiterelement (52b) nacheinander zwischen dem Lichtverschluss (53) und der Zielzone (TG) angeordnet sind, und die am Kopf zu befestigende Anzeigevorrichtung (501) ferner umfasst:
einen Polarisator (54) für die zweite Richtung, der zwischen dem Lichtverschluss (53) und dem ersten Teil-Lichtwellenleiterelement (52a) angeordnet ist und das erste Umgebungslicht (AMBL1) empfängt;
einen ersten Phasenverzögerer (55), der zwischen dem Polarisator (54) für die zweite Richtung und dem ersten Teil-Lichtwellenleiterelement (52a) angeordnet ist und ein zweites Umgebungslicht (AMBL1) entsprechend dem ersten Umgebungslicht (AMBL1) erzeugt;
einen zweiten Phasenverzögerer (56), der zwischen dem ersten Teil-Lichtwellenleiterelement (52a) und dem zweiten Teil-Lichtwellenleiterelement (52b) angeordnet ist;
einen ersten Richtungspolarisator (57), der zwischen dem zweiten Phasenverzögerer (56) und dem zweiten Teil-Lichtwellenleiterelement (52b) angeordnet ist;
ein Lichtteilungselement (58), das ein Umgebungslichtbild empfängt und das Umgebungslichtbild an die Anzeige (51) überträgt, wobei das Lichtteilungselement (58) das Anzeigebild (CIMG) empfängt und das Anzeigebild (CIMG) an das zweite Teil-Lichtwellenleiterelement (52b) überträgt; und
einen dritten Phasenverzögerer (59), der benachbart zu einer Oberfläche des Lichtteilers (58) angeordnet ist, das zweite Umgebungslicht (AMBL1) empfängt und das Anzeigebild (CIMG) überträgt;
wobei das zweite Teil-Lichtwellenleiterelement (52b) das Anzeigebild (CIMG) und das zweite Umgebungslicht (AMBL1) an die Zielzone (TG) überträgt.

## Revendications

1. Dispositif d'affichage à monter sur la tête (300), comprenant :
un écran (310), fournissant périodiquement une image d'affichage (IMG) en fonction d'un signal synchrone (CTR1) ;
un élément de guidage d'onde lumineuse (320), couplé à l'écran (310), comportant une première surface (SF1) et une deuxième surface (SF2) opposées l'une à l'autre, dans lequel l'élément de guidage d'onde lumineuse (320) est adapté pour recevoir l'image d'affichage (IMG), pour générer une image de projection en fonction de l'image d'affichage (IMG), pour projeter l'image de projection depuis la deuxième surface (SF2), et pour projeter l'image de projection vers une zone cible (TG) à partir de la première surface (SF1), dans lequel le dispositif d'affichage à monter sur la tête (300) est configuré de telle sorte que la zone cible (TG) corresponde à une position du globe oculaire d'un utilisateur ; et
un obturateur de lumière (330), adjacent à la deuxième surface (SF2) de l'élément de guide d'onde lumineux (320), couplé à l'élément de guide d'onde lumineux (320), dans lequel l'obturateur de lumière (330) est périodiquement désactivé et activé de manière alternée en fonction du signal synchrone (CTR1),
dans lequel l'obturateur de lumière (330) est configuré pour permettre à une première lumière ambiante (AMBL) d'être transmise à l'élément de guide d'onde lumineux (320) lorsque l'écran (310) cesse de fournir l'image d'affichage (IMG) ;
dans lequel un rapport cyclique du signal synchrone (CTR1) est réglable de manière dynamique pour ajuster la luminosité de l'image d'affichage (IMG) ; et
dans lequel l'élément de guide d'onde lumineux (320) est adapté pour générer des images de projection (PGL1, PGL2) de lumière polarisée dans une première direction en fonction de l'image d'affichage (IMG) de lumière polarisée dans une deuxième direction, la première direction de polarisation étant différente de la deuxième direction de polarisation, et l'obturateur de lumière (330) est un obturateur de lumière à cristaux liquides à commande électrique.

2. Dispositif d'affichage à monter sur la tête (300) selon la revendication 1, dans lequel la lumière polarisée dans la première direction est une lumière P, et la lumière polarisée dans la deuxième direction est une lumière S.

3. Dispositif d'affichage à monter sur la tête (400, 500), comprenant :
un dispositif d'affichage (410, 510), fournissant périodiquement une image d'affichage (IMG) d'une lumière polarisée circulairement dans un premier sens de rotation en fonction d'un signal synchrone (CTR1) ;
un élément de guide d'onde lumineux (420, 520), couplé à l'écran (410, 510), comportant une première surface (SF1) et une deuxième surface (SF2) opposées l'une à l'autre, dans lequel l'élément de guide d'onde lumineux (420, 520) est adapté pour recevoir l'image d'affichage (IMG), de générer une image de projection en fonction de l'image d'affichage (IMG), pour projeter l'image de projection depuis la deuxième surface (SF2), et pour projeter l'image de projection vers une zone cible (TG) depuis la première surface (SF1), dans lequel le dispositif d'affichage à monter sur la tête (400, 500) est configuré de telle sorte que la zone cible (TG) corresponde à une position du globe oculaire d'un utilisateur ;
un obturateur de lumière (430, 530), adjacent à la deuxième surface (SF2) de l'élément de guidage d'onde lumineuse (420, 520), couplé à l'élément de guidage d'onde lumineuse (420, 520), dans lequel l'obturateur de lumière (430, 530) est périodiquement désactivé et activé de manière alternée en fonction du signal synchrone (CTR1),
un premier retardateur de phase (450, 550), disposé entre la deuxième surface (SF2) de l'élément de guide d'onde lumineux (420, 520) et l'obturateur de lumière (430, 530) ;
un polariseur de première direction (431, 531), disposé entre le premier retardateur de phase (450, 550) et l'obturateur de lumière (430, 530) ; et
un polariseur de deuxième direction (432, 532), dans lequel l'obturateur de lumière (430, 530) est disposé entre le polariseur de première direction (431, 531) et le polariseur de deuxième direction (432, 532).
dans lequel l'obturateur de lumière (430, 530) est configuré pour permettre à une première lumière ambiante (AMBL) d'être transmise de manière à l'élément de guide d'onde lumineux (420, 520) lorsque l'écran (410, 510) cesse de fournir l'image d'affichage (IMG) ;
dans lequel un rapport cyclique du signal synchrone (CTR1) est réglable de manière dynamique pour ajuster la luminosité de l'image d'affichage (IMG) ; et
dans lequel l'élément de guide d'onde lumineux (420, 520) est adapté pour générer l'image de projection d'une lumière polarisée circulairement selon un premier sens de rotation à projeter vers la zone cible (TG) et l'obturateur de lumière (430, 530), dans lequel le premier sens de rotation de la lumière polarisée circulairement est différent du deuxième sens de rotation de la lumière polarisée circulairement, et l'obturateur de lumière (130, 330, 430, 530) est un obturateur de lumière à cristaux liquides à commande électrique.

4. Dispositif d'affichage à monter sur la tête (400, 500) selon la revendication 3, dans lequel la lumière polarisée circulairement selon la première direction de rotation est une lumière polarisée circulairement vers la gauche, LCP, et la lumière polarisée circulairement selon la deuxième direction de rotation est une lumière polarisée circulairement vers la droite, RCP.

5. Dispositif d'affichage à monter sur la tête (300, 400, 500) selon l'une quelconque des revendications 1 à 4, dans lequel l'obturateur de lumière (330, 430, 530) est configuré pour empêcher la première lumière ambiante (AMBL) d'être transmise à l'élément de guide d'onde lumineux (320, 420, 520) lorsque l'affichage (310, 410, 510) fournit l'image d'affichage (IMG).

6. Dispositif d'affichage à monter sur la tête (100, 300, 400, 500) selon la revendication 1 ou 2, dans lequel l'obturateur de lumière (330) est adapté pour filtrer une composante de lumière polarisée linéairement dans une première direction dans la première lumière ambiante (AMBL) et pour transmettre une composante de lumière polarisée linéairement dans une première direction dans la première lumière ambiante (AMBL) vers la zone cible (TG), l'écran (310) est adapté pour fournir l'image d'affichage (IMG) d'une lumière polarisée linéairement dans une deuxième direction, et l'élément de guide d'onde lumineux (320) est adapté pour générer l'image de projection de cette même lumière polarisée linéairement dans une deuxième direction.

7. Dispositif d'affichage à monter sur la tête (400, 500) selon la revendication 3 ou 4, dans lequel le polariseur de deuxième direction (432, 532), l'obturateur de lumière (430, 530), et le polariseur de première direction (431, 531) sont adaptés pour filtrer une composante de lumière polarisée linéairement dans une deuxième direction de la première lumière ambiante (AMBL) et pour fournir une composante de lumière polarisée linéairement dans une première direction de la première lumière ambiante (AMBL) au premier retardateur de phase (450, 550) lorsque l'obturateur de lumière (430, 530) est désactivé, et le premier retardateur de phase (450, 550) est adapté pour convertir la composante de lumière polarisée linéairement dans la première direction de la première lumière ambiante (AMBL) en lumière polarisée circulairement dans la deuxième direction afin d'être projetée vers l'élément de guide d'onde lumineux (420, 520).

8. Dispositif d'affichage à monter sur la tête (500) selon la revendication 3 ou 4, comprenant en outre :
un deuxième retardateur de phase (560), disposé entre la première surface (SF1) de l'élément de guide d'onde lumineux (520) et la zone cible (TG) ; et
un polariseur linéaire (570), disposé entre le deuxième retardateur de phase (560) et la zone cible (TG).

9. Dispositif d'affichage à monter sur la tête (500) selon la revendication 8, dans lequel l'écran (510) est adapté pour fournir l'image d'affichage (IMG) de la lumière polarisée circulairement dans le premier sens de rotation, et l'élément de guidage d'onde lumineuse (520) est adapté pour générer l'image de projection de la lumière polarisée circulairement dans le deuxeème sens de rotation, et le deuxième retardateur de phase (560) et le polariseur linéaire (570) sont adaptés pour convertir l'image de projection en lumière polarisée linéairement dans la première direction à projeter vers la zone cible (TG).

10. Dispositif d'affichage à monter sur la tête (500) selon la revendication 9, dans lequel le deuxième retardateur de phase (560) et le polariseur linéaire (570) sont adaptés pour convertir la première lumière ambiante de la lumière polarisée circulairement dans la deuxième direction en lumière polarisée linéairement dans la première direction.

11. Dispositif d'affichage à monter sur la tête (500) selon la revendication 10, dans lequel le polariseur linéaire (570) est adapté pour recevoir en outre une deuxième lumière ambiante (AMBL2), et le polariseur linéaire (570) et le deuxième retardateur de phase (560) sont adaptés pour convertir la deuxième lumière ambiante (AMBL2) en lumière polarisée circulairement dans la deuxième direction afin qu'elle soit transmise à l'élément de guide d'onde lumineux (520).

12. Dispositif d'affichage à monter sur la tête (501) selon la revendication 1 ou 2, dans lequel l'élément de guide d'onde lumineux comprend un premier sous-élément de guide d'onde lumineux (52a) et un deuxième sous-élément de guide d'onde lumineux (52b), le premier sous-élément de guide d'onde lumineux (52a) et le deuxième sous-élément de guide d'onde lumineux (52b) sont disposés successivement entre l'obturateur de lumière (53) et la zone cible (TG), et le dispositif d'affichage à monter sur la tête (501) comprend en outre :
un polariseur de deuxième direction (54), disposé entre l'obturateur de lumière (53) et le premier sous-élément de guide d'onde lumineux (52a), recevant la première lumière ambiante (AMBL1) ;
un premier retardateur de phase (55), disposé entre le polariseur de deuxième direction (54) et le premier sous-élément de guide d'onde lumineux (52a), générant une deuxième lumière ambiante (AMBL1) en fonction de la première lumière ambiante (AMBL1) ;
un deuxième retardateur de phase (56), disposé entre le premier sous-élément de guide d'onde lumineux (52a) et le deuxième sous-élément de guide d'onde lumineux (52b) ;
un polariseur de première direction (57), disposé entre le deuxième retardateur de phase (56) et le deuxième sous-élément de guide d'onde lumineux (52b) ;
un élément de séparation de lumière (58), recevant une image de lumière ambiante, transférant l'image de lumière ambiante vers l'écran (51), dans lequel l'élément de séparation de lumière (58) reçoit l'image d'affichage (CIMG) et transfère l'image d'affichage (CIMG) vers le deuxième sous-élément de guide d'onde lumineux (52b) ; et
un troisième retardateur de phase (59), disposé à proximité d'une surface de l'élément de séparation de lumière (58), recevant la deuxième lumière ambiante (AMBL1) et transmettant l'image d'affichage (CIMG) ;
dans lequel le deuxième sous-élément de guide d'onde lumineux (52b) transmet l'image d'affichage (CIMG) et la deuxième lumière ambiante (AMBL1) vers la zone cible (TG).
